# EUROPÄISCHE PATENTANMELDUNG

(11) **EP 3 136 291 A1**
(43) Veröffentlichungstag der Anmeldung: **01.03.2017**
(21) Anmeldenummer: 15465533.6
(22) Anmeldetag: 31.08.2015
(51) Int. Cl.: G06K 9/00, G06K 9/20

(54) **VERFAHREN UND VORRICHTUNG ZUR ERKENNUNG VON OBJEKTEN BEI DUNKELHEIT MITTELS EINER FAHRZEUGKAMERA UND EINER FAHRZEUGBELEUCHTUNG**

(71) Anmelder: Continental Automotive GmbH, 30165 Hannover (DE)
(72) Erfinder: Pahontu, Nicolae, 405100 Campia Turzii (RO)
(74) Vertreter: Reuter, Andreas

(57) **Zusammenfassung**

Die Erfindung betrifft ein Verfahren und eine Vorrichtung zur Erkennung von Objekten bei Dunkelheit mittels einer Fahrzeugkamera und einer Fahrzeugbeleuchtung.

Das Verahren umfasst die folgenden Schritte:
a) Aufnehmen eines ersten Bilds mit ausgeschalteter Fahrzeugbeleuchtung
b) Aufnehmen eines zweiten Bilds mit eingeschalteter Fahrzeugbeleuchtung
c) Erzeugen eines Differenzbilds von zweitem und erstem Bild und
d) Erkennen von reflektierenden Objekten anhand des Differenzbilds.

## Beschreibung

Die Erfindung betrifft ein Verfahren und eine Vorrichtung zur Erkennung von Objekten bei Dunkelheit mittels einer Fahrzeugkamera und einer Fahrzeugbeleuchtung.

WO 2009143910 A1 zeigt eine Vorrichtung für ein Kraftfahrzeug, die einen Scheinwerfer zur Beleuchtung einer Umgebung des Kraftfahrzeuges mit Lichtpulsen und eine Kamera zur Erzeugung von Bildern der Umgebung des Kraftfahrzeuges umfasst. Die Kamera und der Scheinwerfer sind derart synchronisiert, dass die Kamera die Bilder in Dunkelphasen des Scheinwerfers erzeugt. Ferner werden eine Kamera und ein Verfahren zur Erzeugung von Bildern vorschlagen.

EP 2172873 A2 zeigt eine Kamera, auf deren Daten mehrere Fahrerassistenzfunktionen realisiert werden. Zur Nebelerkennung wird vorgeschlagen eine Lichtquelle mit der Bildaufnahme zeitlich zu synchronisieren, so dass ein erstes Bild mit eingeschalteter Lichtquelle und ein zweites mit ausgeschalteter Lichtquelle aufgenommen werden. Das zweite Bild kann vom ersten Bild subtrahiert werden, um eine "Halo" zu erkennen, die bei Nebel auftritt.

WO 2009052788 A1 zeigt ein Verfahren und eine Vorrichtung zur Unterscheidung und Identifizierung von Reflektoren am Fahrbahnrand und Fahrzeuglichtern zum Einsatz in einer automatischen Lichtsteuerung in einem Fahrzeug mit einem in die Fahrzeugumgebung ausgerichteten Kamerasensor. Hierbei wird bei der Unterscheidung die Position eines Lichtpunkts im Kamerabild berücksichtigt anhand einer statistischen Karte, der zu entnehmen ist, in welchen Bildbereichen vorrangig Fahrzeuglichter bzw. Reflektoren zu erwarten sind.

US 2015048738 A1 zeigt ein Fahrzeugkamerasystem und -verfahren zur Unterscheidung von reflektierenden Objekten und Lichtern anderer Fahrzeuge. Wenn Lichtquellen im Kamerabild detektiert werden, wird die eigene Fahrzeugaußenbeleuchtung moduliert und ermittelt, ob die detektierten Lichtquellen diesem Modulationsmuster folgen. Falls ja, werden die Lichtquellen reflektierenden Objekten zugeordnet. Nur falls nicht, wird ein Signal ausgegeben, dass andere Fahrzeuge im Kamerasichtbereich befindlich sind, woraufhin zum Beispiel das eigene Fernlicht deaktiviert werden kann.

Aufgabe der Erfindung ist es, eine verbesserte Objekterkennung auf der Basis von Fahrzeugkamerabilddaten bei Dunkelheit anzugeben.

Ein erfindungsgemäßes Verfahren zur Erkennung von Objekten mittels einer Fahrzeugkamera und einer Fahrzeugbeleuchtung umfasst die folgenden Schritte:
a) Aufnehmen eines ersten Bilds mit ausgeschalteter Fahrzeugbeleuchtung
b) Aufnehmen eines zweiten Bilds mit eingeschalteter Fahrzeugbeleuchtung
c) Erzeugen eines Differenzbilds von zweitem und erstem Bild und
d) Erkennen von reflektierenden Objekten anhand des Differenzbilds.

Als Fahrzeugkamera kann eine Monokamera, vorzugsweise farbauflösend, eine Stereokamera, ein Rundumsichtkamerasystem oder eine Kombination aus mehreren (auch gleichartigen) der genannten Kamerasysteme vorgesehen sein.

Vorzugsweise sind eine oder mehrere Steuereinrichtungen zur Synchronisierung der Fahrzeugbeleuchtung mit den Bildaufnahmeperioden der Fahrzeugkamera vorgesehen. Als Fahrzeugbeleuchtung sind insbesondere die Fahrzeugumgebung beleuchtende Fahrzeugscheinwerfer vorgesehen, die einzeln, in Gruppen oder insgesamt kurzzeitig aus- und wieder angeschaltet werden können. Die Schritte c) und d) können vorteilhaft im Rahmen einer Bildverarbeitung durchgeführt werden.

Die zur Synchronisierung erforderliche Kommunikation zum An- und Ausschalten der Fahrzeugbeleuchtung kann über Kabel oder kabellos erfolgen.

Im ersten Bild werden nur selbständig leuchtende Lichtquellen, sowie von diesen beleuchtete Objekte von der Fahrzeugkamera erfasst. Im zweiten Bild werden zusätzlich auch reflektierende Objekte, die von der aktivierten Fahrzeugbeleuchtung angestrahlt werden erfasst. Besonders gut werden speziell reflektierende Objekte (Retroreflektoren) erfasst, andere Gegenstände reflektieren deutlich weniger Licht von der Fahrzeugbeleuchtung in die Fahrzeugkamera.

Im Differenzbild sind daher im Wesentlichen nur reflektierende Objekte enthalten. Diese Objekte können daher aus dem Differenzbild detektiert und bevorzugt auch identifiziert werden. Im Straßenverkehr wird eine Vielzahl von reflektierenden Oberflächen gezielt eingesetzt, um das Fahren bei Dunkelheit zu erleichtern. Da diese zur Wahrnehmung durch das menschliche Auge geschaffen sind, können sie von der Fahrzeugkamera sehr gut erfasst werden.

Die Erfindung bietet den Vorteil, dass sämtliche von der Kamera erfassten reflektierenden Objekte bei Dunkelheit sehr gut detektiert und erkannt werden können.

Fahrbahnmarkierungen und -begrenzungen sind häufig reflektierend: Fahrspurbegrenzungslinien (durchgezogen, gestrichelt, durch Bott's Dots gepunktet), Leitplanken mit Reflektorelementen, Leitpfosten. Teilweise sind diese für unterschiedliche Seiten oder Fahrspurränder farblich unterschiedlich markiert, was die Orientierung bei Dunkelheit erleichtert.

Auch Verkehrszeichen bzw. -schilder sind typischerweise retroreflektierend, ausgeschaltete Lichtzeichenanlagen reflektieren. Typisch für diese Objekte ist zudem, dass sie stationär angeordnet sind.

Wenn eine Fahrbahn ausreichend mit derartigen reflektierenden Objekten ausgestattet ist, kann aus dem Differenzbild bevorzugt der weitere Straßen- und Fahrspurverlauf, ggfs. mit Überholmöglichkeit bzw. Überholverbot ermittelt werden, was für Spurunterstützungsfunktionen wie Lane Departure Warning (LDW), Lane Keeping Assist / System (LKA/LKS) oder Spurwechselassistenten wesentlich ist.

Weitere relevante Objekte, die aufgrund Ihrer reflektierenden Eigenschaften vorteilhaft aus dem Differenzbild erkannt werden können, sind andere Verkehrsteilnehmer oder Hindernisse ohne selbständige Lichtquelle mit Reflektoren. Dies kann z.B. ein stehendes Fahrzeug mit deaktivierter Beleuchtung, ein Radfahrer ohne Licht, ein Fußgänger oder auch Kinder mit reflektierender Kleidung oder Schulranzen sein.

Während die Fahrbahninfrastrukturreflektoren i.d.R. typische Formen, Farben, Verläufe und Positionen aufweisen, können andere Verkehrsteilnehmer und Hindernisse eine Vielzahl unterschiedlicher Reflektoranordnungen und -typen aufweisen. Abgesehen von stehenden Hindernissen, sind andere Verkehrsteilnehmer häufig dadurch erkennbar, dass sie sich bewegen. Vorteilhaft kann die Farbe der reflektierenden Objekte aus dem Differenzbild ermittelt und bei deren Erkennung berücksichtigt werden. Neben farbspezifischen Fahrbahnverlaufsmarkierungen z.B. für den rechten und linken Fahrbahnrand können so z.B. rote Rückreflektoren bei Fahrrädern oder Fahrzeugen mit ausgeschalteter Beleuchtung, orange Reflektoren in Fahrradpedalen oder -speichen ermittelt werden, wodurch die entsprechenden Objekte zuverlässiger identifiziert werden können. Auch die Farbe von Verkehrsschildern kann so gut detektiert werden.

Fahrzeugkameras weisen typischerweise eine hohe Empfindlichkeit und einen großen Dynamikbereich auf. Damit das Ausschalten der Fahrzeugbeleuchtung vom Fahrer und anderen Verkehrsteilnehmern nicht als störend empfunden wird, kann die Belichtungszeit des ersten Bilds bevorzugt möglichst kurz gewählt bzw. vorgegeben werden. Die selbständig leuchtenden Lichtquellen können auch mit kurzer Belichtungszeit erfasst werden. Außerdem fallen Verschiebungen im Bild aufgrund von Bewegungen (des eigenen Fahrzeugs und anderer Verkehrsteilnehmer), die zu Artefakten im Differenzbild führen können, geringer aus. Eine kurze Belichtungszeit kann dabei bis zu 10 ms, bevorzugt nur bis zu 5 ms betragen.

Um die geschilderte Artefaktbildung im Differenzbild aufgrund von Bewegung des eigenen Fahrzeugs und möglicherweise auch anderer Verkehrsteilnehmer zwischen dem Aufnehmen des ersten und des zweiten Bilds zu verhindern bzw. zu minimieren, kann vorteilhaft die Eigenbewegung des eigenen Fahrzeugs und damit der Fahrzeugkamera und optional die Bewegung anderer Verkehrsteilnehmer berücksichtigt werden.

Dazu können mittels Bildverarbeitung im ersten Bild externe Lichtquellen ermittelt und deren Position bestimmt werden. Deren Position im zweiten Bild kann unter Berücksichtigung der Eigenbewegung prädiziert werden. Entscheidend für die Eigenbewegung ist zunächst die eigene Geschwindigkeit, es kann zusätzlich die eigene Beschleunigung, Gierwinkel, Gierrate etc. in die Prädiktion einfließen. Damit können stationäre externe Lichtquellen bereits gut prädiziert werden.

Ein vorhergehendes Tracking von Lichtflächen bei ersten Bildern kann ergeben, dass es bewegte externe Lichtquellen gibt (z.B. Fahrzeugscheinwerfer fahrender Fahrzeuge). Deren Prädiktion in einem späteren zweiten Bild kann durch eine Schätzung der Bewegungsgrößen (Geschwindigkeit, Beschleunigung, Gier-, Nick-, Rollwinkel bzw. -rate) bzw. des Bewegungsvektors verbessert werden.

Eine vorteilhafte Ausführungsform der Erfindung besteht darin, dass als Fahrzeugkamera ein Rundumsichtkamerasystem verwendet wird, das vorteilhaft vier oder mehr Einzelkameras mit großem Öffnungswinkel erfasst. Bevorzugt können dann einzelne Fahrzeuglampen synchronisiert zur Bildaufnahme ausgeschaltet werden, die in den Erfassungsbereich einer Einzelkamera leuchten.

Ein weiterer Gegenstand der Erfindung ist eine Vorrichtung zur Erkennung von Objekten bei Dunkelheit mittels einer Fahrzeugkamera und einer Fahrzeugbeleuchtungssteuerung.

Im Folgenden werden weitere Ausführungsbeispiele der Erfindung anhand von Figuren erläutert.

Es zeigen:
Fig. 1 schematisch eine Fahrsituation, und
Fig. 2 ein Fahrzeug mit Fahrzeugkamera und Fahrzeugbeleuchtung.

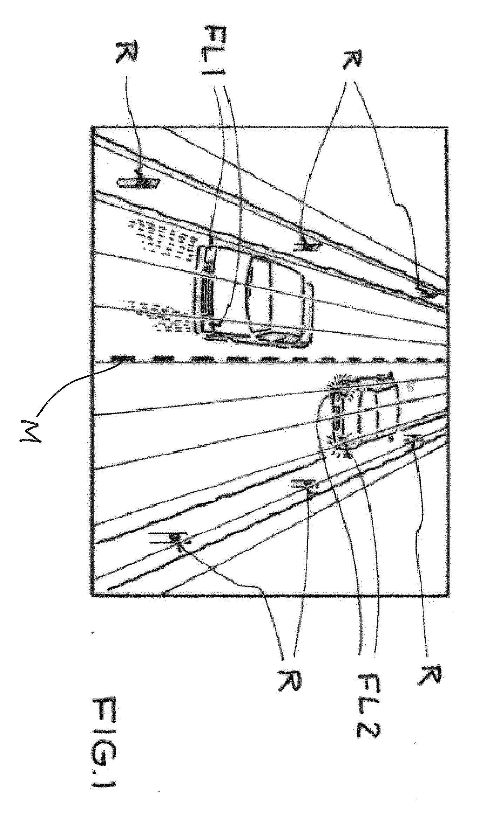

In Fig. 1 ist die vollständige Situation dargestellt, die bei ausreichender Helligkeit von einer Fahrzeugfrontkamera (1) eines Fahrzeugs (5) erfasst werden könnte. Das Kamerabild zeigt eine Fahrbahn mit einer gestrichelten Mittellinie (M), ein entgegenkommendes Fahrzeug auf der linken Seite mit Frontscheinwerfern (FL1) und ein vorausfahrendes Fahrzeug mit Rücklichtern (FL2) auf der rechten Seite sowie Reflektoren (R), die links und rechts am Fahrbahnrand angeordnet sind.

Bei Dunkelheit und eingeschalteter Fahrzeugbeleuchtung (2, 4) des eigenen Fahrzeugs (5) sind dagegen im Kamerabild nur noch die Fahrzeuglichter und Reflektoren der Leit- bzw. Straßenbegrenzungspfosten als Lichtflächen sowie eine stark reflektierende Mittelmarkierung (M) als Lichtstreifen zu erkennen. Bei ausgeschalteter eigener Fahrzeugbeleuchtung (2, 4) sind nur noch die von den Fahrzeugscheinwerfern (FL1) des entgegenkommenden bzw. den Fahrzeugscheinwerfern (FL2) des vorausfahrenden Fahrzeugs als Lichtflächen erkennbar. Dementsprechend würde ein Differenzbild im Wesentlichen die Lichtflächen repräsentieren, die von den Reflektoren (R) der seitlichen Leitpfosten und der reflektierenden Mittelmarkierung (M) aufgrund der Reflexion der eigenen Fahrzeugbeleuchtung abgebildet sind. Ebenso würden Lichtflächen aufgrund von reflektierenden Verkehrszeichen am Fahrbahnrand, von unbeleuchteten Fahrzeugreflektoren, Fahrradreflektoren, reflektierender Kleidung von Personen usw. (nicht dargestellt) im Differenzbild hervortreten, die der Erkennung derartiger Objekte bei Dunkelheit förderlich sind.

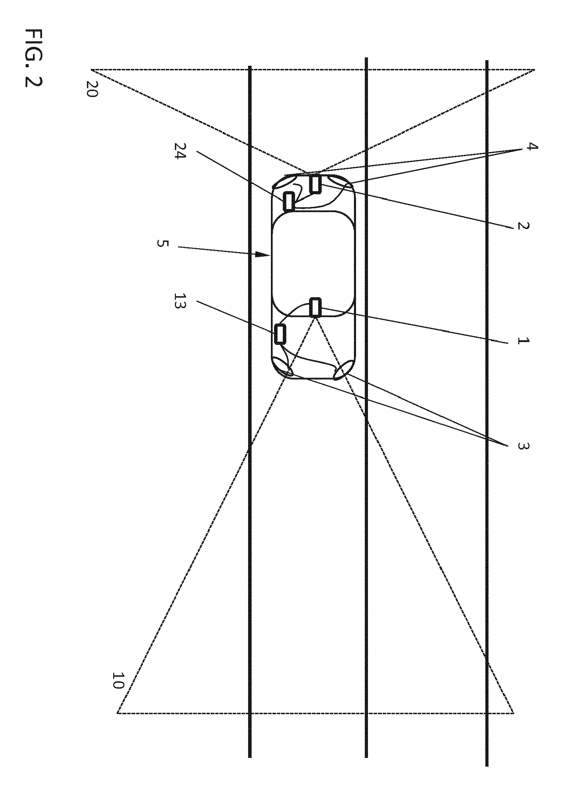

In Fig. 2 ist ein Fahrzeug (5) dargestellt mit einer Fahrzeugfrontkamera (1), die einen Frontbereich (10) erfasst und einer Fahrzeugrückkamera (2), die einen rückwärtigen Bereich (20) erfasst. Die Steuerung der Frontscheinwerfer (3) kann durch eine Frontsteuereinheit (13) synchronisiert zur Bildaufnahme der Fahrzeugfrontkamera (1) aus- und wieder angeschaltet werden. Ebenso kann die Steuerung der Rücklichter (4) durch eine rückwärtige Steuereinheit (24) synchron zur Bildaufnahme der Fahrzeugrückkamera (2) aus- und wieder angeschaltet werden. Dadurch ist es möglich, ein erstes Bild mit ausgeschalteten Frontscheinwerfern bzw. Rücklichtern mit der Front- bzw. Rückkamera aufzunehmen und direkt anschließend ein zweites Bild mit entsprechend aktivierter Fahrzeugbeleuchtung.

## Patentansprüche

1. Verfahren zur Erkennung von Objekten bei Dunkelheit mittels einer Fahrzeugkamera (1, 2) und einer Fahrzeugbeleuchtung (3, 4) umfassend die Schritte
a) Aufnehmen eines ersten Bilds mit ausgeschalteter Fahrzeugbeleuchtung (3, 4)
b) Aufnehmen eines zweiten Bilds mit eingeschalteter Fahrzeugbeleuchtung (3, 4)
c) Erzeugen eines Differenzbilds von zweitem und erstem Bild
d) Erkennen von reflektierenden Objekten (R, M) anhand des Differenzbilds.

2. Verfahren nach Anspruch 1, wobei durch mehrfaches Durchlaufen der Schritte a) bis d) stationäre reflektierende Objekte (R, M) anhand der Differenzbilder erkannt werden.

3. Verfahren nach Anspruch 2, wobei der vorausliegende Straßenverlauf aus der Position und Art der erkannten stationären reflektierenden Objekte (R, M) abgeschätzt wird.

4. Verfahren nach einem der Ansprüche 1 bis 3, wobei abgeschätzt wird, ob reflektierende Objekte Verkehrsteilnehmer oder Hindernisse ohne selbständige Lichtquelle darstellen können.

5. Verfahren nach Anspruch 4, wobei nichtstationäre reflektierende Objekte als Verkehrsteilnehmer erkannt werden.

6. Verfahren nach einem der vorhergehenden Ansprüche, wobei die Farbe der reflektierenden Objekte (R, M) ermittelt und bei deren Erkennung berücksichtigt wird.

7. Verfahren nach einem der vorhergehenden Ansprüche, wobei eine Eigenbewegung des Fahrzeugs (5) beim Erzeugen des Differenzbilds berücksichtigt wird, indem anhand der Position von Lichtflächen im ersten Bild die Position dieser Lichtflächen im zweiten Bild prädiziert wird.

8. Verfahren nach einem der vorhergehenden Ansprüche, wobei eine Bewegung von Lichtflächen aus einer Folge von ersten Bildern ermittelt wird und die Bewegung beim Erzeugen des Differenzbildes aus einem weiteren ersten Bild und einem darauffolgenden zweiten Bild berücksichtigt wird.

9. Verfahren nach einem der vorhergehenden Ansprüche, wobei die Fahrzeugkamera ein Rundumsichtkamerasystem ist.

10. Vorrichtung zur Erkennung von Objekten bei Dunkelheit mittels einer Fahrzeugkamera (1, 2) und einer Fahrzeugbeleuchtungssteuerungseinheit (13, 24) umfassend Aufnahmemittel ausgebildet zum
a) Aufnehmen eines ersten Bilds mit ausgeschalteter Fahrzeugbeleuchtung (3, 4)
b) Aufnehmen eines zweiten Bilds mit eingeschalteter Fahrzeugbeleuchtung (3, 4);
eine Bildverarbeitungseinheit, ausgebildet zum
c) Erzeugen eines Differenzbilds von zweitem und erstem Bild, und zum
d) Erkennen von reflektierenden Objekten (R, M) anhand des Differenzbilds.
